# EUROPEAN PATENT SPECIFICATION

(11) **EP 3 962 259 B1**
(45) Date of publication and mention of the grant of the patent: **23.10.2024**
(21) Application number: 19724004.7
(22) Date of filing: 01.05.2019
(51) Int. Cl.: A01C 19/02, A01C 23/00, A01C 23/02, A01M 7/00, A01C 21/00

(54) **SYSTEMS AND METHOD FOR PRECISE DISTRIBUTION FLUIDIC AGRICULTURAL COMMODITIES**
SYSTEME UND VERFAHREN ZUR PRÄZISEN VERTEILUNG FLUIDISCHER LANDWIRTSCHAFTLICHER ARTIKEL
SYSTÈMES ET PROCÉDÉ DE DISTRIBUTION PRÉCISE DE MARCHANDISES AGRICOLES FLUIDIQUES

(43) Date of publication of application: 09.03.2022
(73) Proprietor: Deere & Company, Moline, IL 61265 (US)
(72) Inventor: WONDERLICH, Grant, J., Moline, IL 61265 (US)
(74) Representative: Reichert, Christian
(86) International application number: PCT/US2019/030246
(87) International publication number: WO 2020/222841

(56) References cited:
- CA-A1- 3 019 036
- US-A- 4 467 961
- US-A1- 2016 057 923
- US-B1- 7 694 638

## Description

### BACKGROUND

### Field

The present invention relates to a fluid metering system for a machine such as an agricultural implement, and in particular, relates to a metering system having one or more pumps and motors.

### Description of the Related Art

Liquid fertilizer is commonly applied to an agricultural field before, during or after planting of a crop. A typical liquid fertilizer application system includes a tank for holding the liquid fertilizer, a pump for pumping the fertilizer from the tank, a plurality of distribution lines that eventually deliver the liquid to a delivery tube or spray nozzle, for placing the liquid on or in the soil near the plants. Downstream from the pump, various orifices, valves, etc. may be used to meter the volume of liquid directed to each crop row or outlet to deliver the desired application rate. The size of the pump is dependent on the width of the machine, i.e. the number of crop rows to be treated. Furthermore, the flow control orifices, and or valves must be customized for each row, taking into consideration the length of the line from the pump to the row. This adds considerable complexity to the manufacture of multiple machine models, types and widths.

As the cost of fertilizers and other inputs to an agricultural field increase, it becomes more important to precisely control the application of inputs to the field to avoid excess application rates, overlaps in application, application to non-crop areas, etc. One such system for doing so is described in US patent No. 7,395,769. This patent describes a liquid application system with a single pump supplying liquid to a number of bypass valves, one for each row. The bypass valves are controlled to vary the rate of liquid application at each row. This system requires a liquid return line for the bypassed liquid. Furthermore, the size of the pump must vary over a full line of implements widths, or a single maximum sized pump is used on all implements, adding unnecessary cost to those implements not needing the full capacity of the pump. Further relevant prior art is US 7 694 638 B1 and US 4 467 961 A.

In large sprayer applications, several materials or solutions, such as nutrients, herbicides, paints, chemicals and other liquids, are applied to agricultural crops or industrial surfaces. Due to the large amounts of fluid and different fluid solutions involved, the control pumps for fluid filling, cleansing, mixing, agitating, spraying and pressurizing are very complicated, bulky, heavy and expensive. Further, the conversation of materials and solutions is becoming more important for customers to save money and to reduce the environmental impact, as well as to address environmental regulations imposed by different countries. For example, regulations may vary by country as to the type of fluids and concentration levels that may be used in large sprayer applications.

To address such concerns, some conventional approaches have employed the use of application systems that provide solution to a boom by one main supply line via a chassis mounted pump that provides the flow for all functions (spraying, loading, agitating, educating, rinsing). Drawbacks to such approaches include non-uniform spray applications and limited to single spray.

To overcome these drawbacks, other conventional approaches have employed the use of dual pumps and manifolds that allow for two different applications at one time. Due to the plumbing and piping arrangement of such systems, system pressures become difficult to control, thereby resulting in uneven pressure distribution across the spray boom and therefore an uneven application rate. For example, as spray booms become wider the problem of uneven distribution is amplified due to head pressures from elevation differences from the pressure transducer to the outer most spray nozzle. This occurs both when the spray boom wing is tilted to compensate for elevation changes and when the sprayer is applying with the boom down an incline.

### SUMMARY

The invention is defined by the appended claims.

### BRIEF DESCRIPTION OF THE DRAWINGS

FIGS. 1A-1C are various embodiments of a distributed pump system.
FIG. 2 is a block diagram of an embodiment of a control system that may be used in connection with one or more of the distributed pump systems disclosed herein.
FIGS. 3-6 are further embodiments of a distributed pump system.
FIGS. 7A-7B are agricultural implements having various embodiments of a distributed pump system as disclosed herein.
FIG. 8 is a side view of a portion of an agricultural implement having an embodiment of a fluid metering system as disclosed herein.
FIG. 9 is a top view of a portion of the agricultural implement shown in FIG. 8.
FIG. 10 is a schematic view of an embodiment of a fluid metering system.
FIG. 11 is an agricultural implement, such as that shown in FIGS. 8-9, coupled to a prime mover.

### DETAILED DESCRIPTION

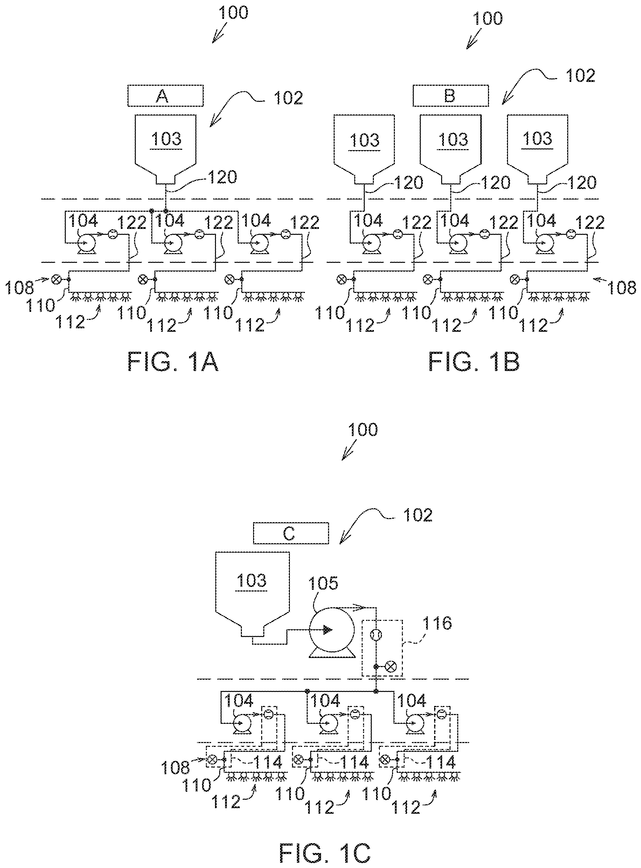

Referring to FIGS. 1A-2, a schematic illustration of a distributed pump system 100 for use with an agricultural sprayer 500 is shown according to an embodiment. Although the distributed pump system 100 is shown as being incorporated in an agricultural sprayer system, it should be noted that system 100 may be incorporated in other application systems such as seeding, cultivating, or planting and that embodiments discussed herein are merely for exemplary purposes to aid in an understanding of the present disclosure.

In embodiments, the distributed pump system 100 can comprise a plurality of fluid distribution elements 104 fixedly or removably coupled to a support structure 106, which are arranged to receive a supply of applicator solution from a supply source 102 for distribution to an application system 108. At least one first monitoring device 114 can be arranged proximate the application system 108 and is used to monitor flow parameters of the distributed pump system 100 for feedback to an electronic control unit 115 to allow for automated and adaptive control of the fluid distribution elements 104.

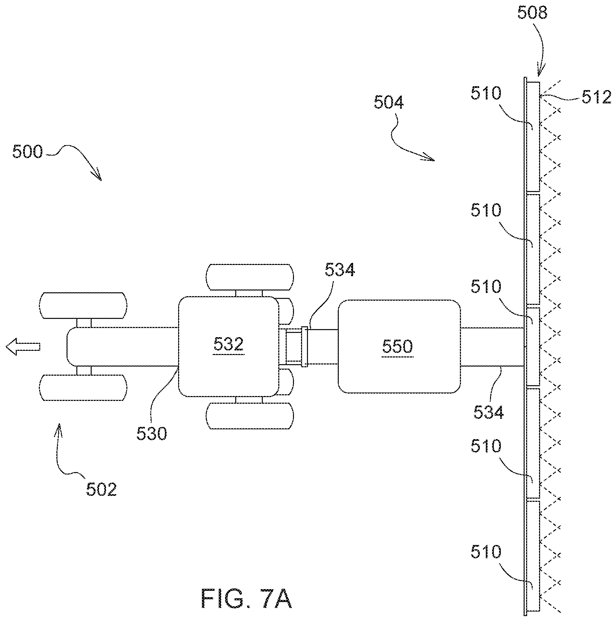

In some embodiments, the supply source 102 can be arranged upstream of the plurality of fluid distribution elements 104 and can comprise one or more solution reservoirs 103 arranged on or proximate an agricultural vehicle 502 (refer, e.g., to FIG. 7A). In other embodiments, the supply source 102 can further comprise a charge pump 105 arranged an outlet of the one or more solution reservoirs 103 (FIG. 1C) that is configured to provide a flow of pressurized applicator solution to downstream components (e.g., fluid distribution elements 104 and application units 110) to maintain a desired system pressure. At least one second monitoring device 116 can be arranged proximate an outlet of the charge pump 105 to monitor flow parameters of the first conduit 120.

As depicted in FIGS. 1A-1C, the plurality of fluid distribution elements 104 can be arranged in fluid communication with the supply source 102 via a first conduit 120. For example, the plurality of fluid distribution elements 104 can be adjacently arranged to receive a supply of applicator solution (e.g., nutrients, herbicides, chemicals, etc.) from either a shared (FIGS. 1A and 1C) or dedicated (FIG. 1B) supply source 102. In some embodiments, the fluid distribution elements 104 can comprise one or more hydraulic and/or electric pumps such as centrifugal pumps, variable displacement pumps, fixed displacement pumps, or combinations thereof, which are sized and scaled according to a variety of application and specification requirements.

As discussed above, each of the plurality of fluid distribution elements 104 can be coupled to the support structure 106, which can comprise structural elements of the agricultural vehicle 502 or of apparatuses attached thereto (e.g., a vehicle chassis or a boom assembly). The structural arrangement and layout of the fluid distribution elements 104, as well as supply source 102, can and will vary based on the selected support structure 106 design. For example, in embodiments in which the support structure 106 comprises a vehicle chassis, each of the fluid distribution elements 104 can be adjacently arranged and positioned to receive fluid directly from the solution reservoirs 103 (i.e., supply source 102 is directly coupled to the fluid distribution elements 104 via the first conduit 120).

In other embodiments, such as when the support structure 106 comprises the boom assembly, the plurality of fluid distribution elements 104 can be mounted directly to the boom assembly and can be supplied via the charge pump 105 rather than receiving a direct supply of applicator solution from the solution reservoirs 103.

The application system 108 can comprise a plurality of application units 110 each having one or more dispensing nozzles 112 arranged to distribute the supply of applicator solution over an agricultural field. In some embodiments, each application unit 110 can be coupled to one or more of the fluid distribution elements 104 via a second conduit 122. The first monitoring device 114 can be coupled to the second conduit 122 proximate an outlet of the fluid distribution elements 104 and arranged upstream of the application system 108. In various embodiments, the first monitoring device 114 can comprise a variety of sensor devices such as, e.g., pressure sensors, pressure transducers, flow meters, velocity meters, or combinations thereof, which are configured to measure system flow parameters and provide feedback signals to the electronic control unit 115.

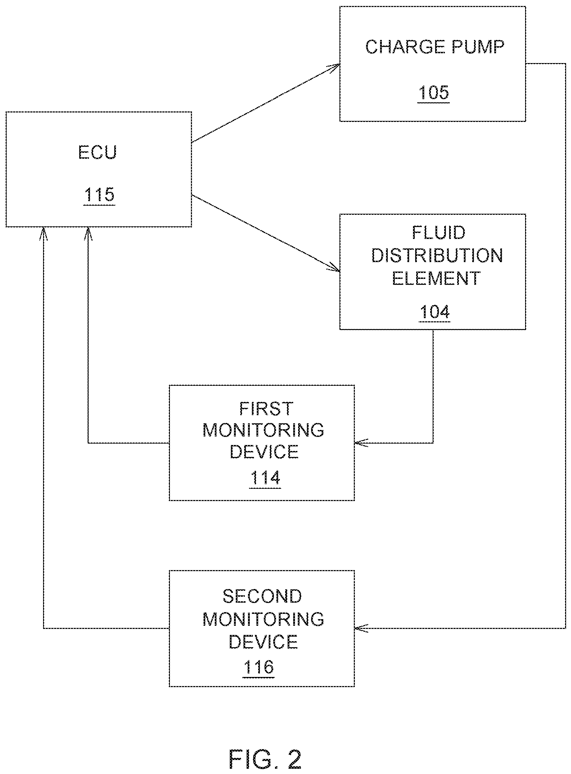

As illustrated in FIG. 2, the electronic control unit 115 can be communicatively coupled to the first and second monitoring devices 114, 116, fluid distribution elements 104, and charge pump 105, and can be configured to generate an output signal to dynamically adjust an input parameter of each of the fluid distribution elements 104 and/or charge pump 105 based on the feedback signal generated by the first and second monitoring devices 114, 116. The electronic control unit 115 can comprise a microprocessor, a microcontroller, a digital signal processor, a programmable logic controller, or other suitable computing devices that is arranged locally on the agricultural vehicle 502 or remotely at a remote processing facility.

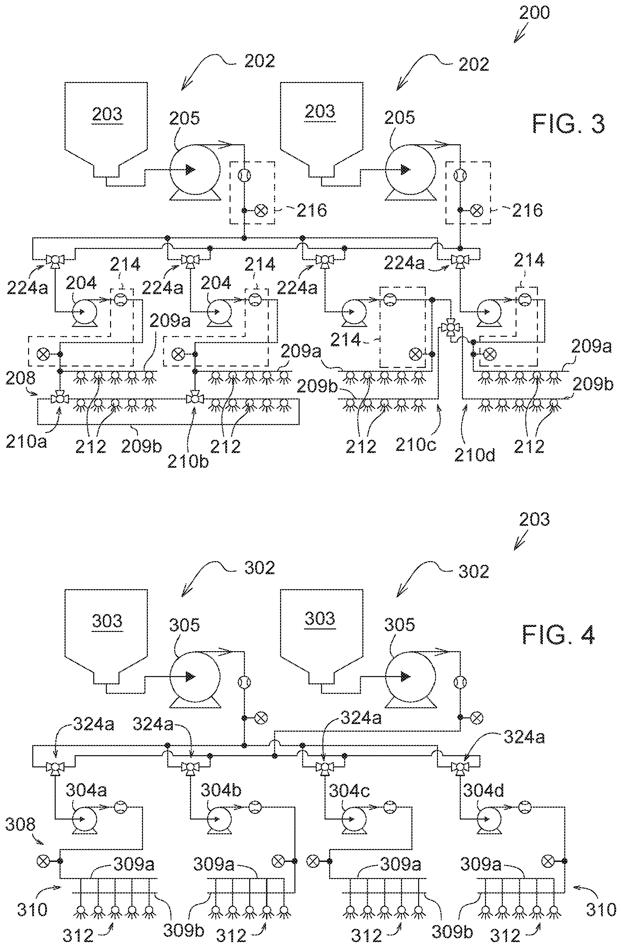

As will be appreciated by those skilled in the art, FIGS. 1A-2 are provided merely for illustrative and exemplary purposes and are in no way intended to limit the present disclosure or its applications. In other embodiments, the component sizing and capacities, arrangement and/or structural configuration of the distributed pump system 100 can and will vary according to application and specification requirements. For example, in some embodiments, the distributed pump system 100 can comprise fewer or more monitoring devices 114, 116 as will be discussed with reference to FIGS. 3-6. Additionally, although in embodiments herein, system 100 is illustrated as comprising three fluid distribution elements 104, in other exemplary embodiments, fewer or more fluid distribution elements 104 may be used.

Referring to FIG. 3, a schematic illustration of a distributed pump system 200 is shown according to an embodiment. The distributed pump system 200 is substantially similar to the embodiments discussed above with reference to system 100. Like reference numerals will be used to designate similar features. In embodiments, the distributed pump system 200 can further comprise a plurality of flow control devices 224 coupled to the first and/or second conduits 220 or 222 to achieve a redundant and high-resolution distribution system as shown in FIG. 3. The flow control devices 224 can be communicatively coupled to the electronic control unit 115 and can comprise a variety of valve configurations (e.g., twoway or three-way valves).

In some embodiments, a main flow control device 224a can be arranged to selectively distribute the applicator solution from a desired supply source 202a, 202b to the fluid distribution elements 204. Similarly, an auxiliary flow control device 224b can be arranged to selectively distribute the applicator solution received at the fluid distribution elements 204 to the application system 208. In embodiments, the application system 208 can comprise one or more dual nozzle application units 210a- 210d each comprising a first portion 209a and a second portion 209b with a plurality of dispensing nozzles 212 arranged thereon. The first portion 209a can be coupled directly to the second conduit 222, and the second portion 209b can be coupled to the auxiliary flow control device 224b.

As previously discussed, supply sources 202a, 202b can be configured to contain the same or different applicator solutions in order to provide for single or dual spray applications. For example, for redundant and single spray applications, each of supply sources 202a, 202b can be configured to contain substantially similar applicator solutions that are supplied to the fluid distribution elements 204 in an alternating manner. In other embodiments, e.g., such as high-resolution spray applications, the entire arrangement of fluid distribution elements 204 can be supplied by a single supply source (e.g., supply source 202a or supply source 202b) rather than collective utilizing both sources. For dual application systems, two distinct applicator solutions can be simultaneously or sequentially applied to the application system 208 from a respective supply source 202a or 202b. For example, supply source 202a can be configured to contain a first applicator solution (e.g., nitrogen) that is supplied to dual nozzle application units 210a and 210b, and supply source 202b can be configured to contain a second applicator solution (e.g., a fungicide) that is supplied to dual nozzle application units 210c and 210d.

In operation, and utilizing either of the above embodiments, the main and auxiliary flow control devices 224a, 224b can be selectively actuated and de-actuated between a first position and a second position via an operator input to establish a corresponding flow path between a respective supply source 202a, 202b, fluid distribution element 204, and application unit 210a-210d. For example, if a high-resolution spray application is desired, each auxiliary flow control device 224b will be operated in the first position to allow solution to be directed out of the dispensing nozzles 212 arranged on the second portion 209b simultaneously with those arranged on the first portion 209a for each application unit 210a-210d.

In contrast, if an operator selects a two solution application in which different applicator solutions are applied or applied at different rates simultaneously, each auxiliary flow control device 224b will operate in the second position to allow solution to be directed out of the dispensing nozzles 212 arranged on the second portion 209b simultaneously with those arranged on the first portion 209a of adjacent application units 210a-210d simultaneously (i.e., entire assembly).

In other embodiments, the distributed pump system 200 can be configured without the main and auxiliary flow control devices 224a, 224b similar to system 100, which would remove the capability to actively control selection of supply sources 202a, 202b.

Referring now to FIG. 4, a distributed pump system 300 is shown according to an embodiment. In embodiments, the distributed pump system 300 can be configured to combine both the high resolution and dual spray application features of distributed pump system 200. The arrangement and configuration of supply sources 302 and fluid distribution elements 304a-304d are substantially similar to that of system 200, however, the application units 310 of the distributed pump system 300 further comprises a split path conduit 309.

The split path conduit 309 of each application unit 310 comprises a first conduit portion 309a and a second conduit portion 309a coupled to a plurality of dispensing nozzles 312. As depicted, the first portion 309a is arranged in fluid communication with a first fluid distribution element (e.g., fluid distribution element 304a or 304c) and a second conduit portion 309b arranged in fluid communication with a second fluid distribution element (e.g., fluid distribution element 304b or 304d). In such arrangement, each of the dispensing nozzles 312 can be supplied by either the first or the second fluid distribution element. In some embodiments, the dispensing nozzles 312 can comprise a plurality of intelligent nozzles that are configured to selectively open to and pull from either the first or second conduit portions 309a or 309b based on a desired spray application. For example, in a high-resolution application, a first half of the dispensing nozzles 312 arranged on application unit 310 can be supplied via the first conduit portion 309a, and a remaining half of the dispensing nozzles 312 can be supplied second conduit portion 309b or vice versa. This provides for recirculation of the application solution through the use of the intelligent dispensing nozzles 312.

For example, during recirculation, each of the dispensing nozzles 312 can be operated in a recirculation mode, wherein an outlet of each of the dispensing nozzles 312 is configured in a closed position and at least two corresponding inlets of the nozzles 312 are configured in an open position such that a supply of applicator solution is received from both the first and second conduit portions 309a, 309b. Additionally, in recirculation mode, the first fluid distribution element (e.g., 304a or 304c) and the second fluid distribution elements (e.g., 304b or 304d) are alternately operated such that only one is used to supply the application units 310. For example, to establish a recirculation path, flow is directed from the operating (i.e., active) fluid distribution element (e.g., 304a or 304c) into the dispensing nozzles 312 and back through the inactive fluid distribution element (e.g., 304b or 304d) for a return to the inlet of the operating fluid distribution element via the flow control device 324. In other embodiments, the distributed pump system 300 can further comprise a recirculation valve (not shown) that would allow flow to be directed through the recirculation valve rather than the dispensing nozzles 312.

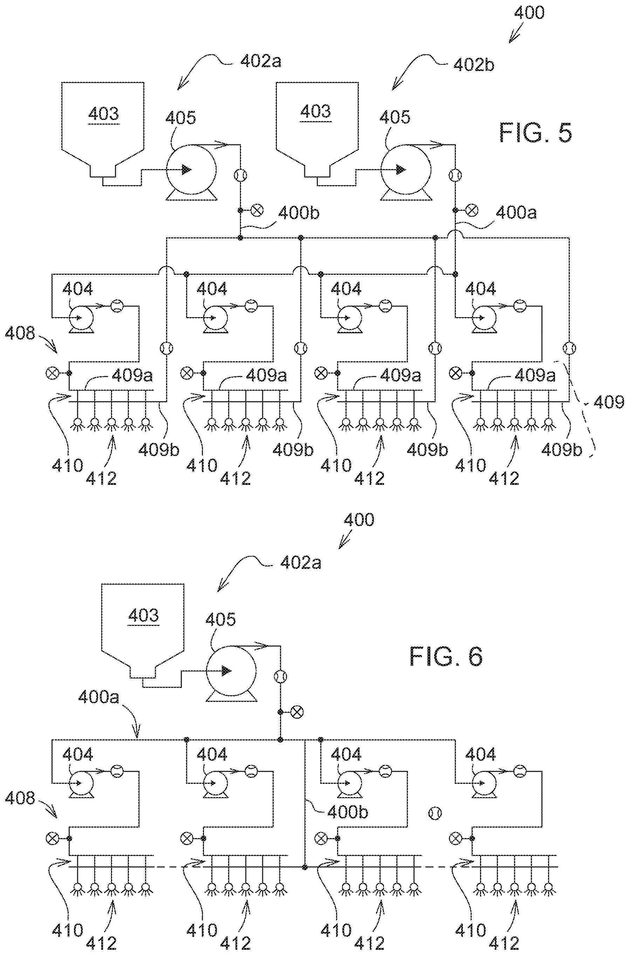

FIGS. 5-6 illustrate other alternative embodiments of the distributed pump system 300. In FIG. 5, a distributed pump system 400 is shown, which combines the functionalities of the distributed pump system 300 and a conventional single pump system. In some embodiments, the distributed pump system 400 can comprise a first pump system 400a (e.g., a distributed pump system) and a second pump system 400b (e.g., a conventional pump system) that are arranged to combine at a split path conduit 409 having a first conduit portion 409a and a second conduit portion 409b. The first pump system 400a is substantially similar to the distributed pump system 300 and will not be discussed in detail with regard to supply sources 402a, 402b and fluid distribution elements 404. It should be noted, however, that the split path conduit 409 of the distributed pump system 400 differs from that of system 300. For example, as shown, the first conduit portion 409a of the split path conduit 409 is arranged in fluid communication with an outlet of each of the fluid distribution elements 404 of the first pump system 400a, and the second portion 409b of the split path conduit 409 is arranged in fluid communication with an outlet of the supply source 402b of the second pump system 400b. Such an arrangement is particularly advantageous in that it provides for more wide-ranging and precise spray applications.

In some embodiments, the first and second pump systems 400a, 400b can be configured to operate simultaneously with one another applying the same or distinct applicator solutions based on a desired spray output. For example, the second pump system 400b can be configured to supply the applicator solution at a base rate, and the first pump system 400a can be configured to compensate for any difference in an application rate when a higher rate is required. The required compensation can be accomplished by supplying additional solution through a selected application unit 410 or by combining flows of the applicator solution at the dispensing nozzles 412 to increase flow and pressure by running the fluid distribution elements 404 in parallel.

In other embodiments, the first and second pump systems 400a, 400b can operate independently of one another to apply different applicator solutions. For example, the second pump system 400b can be configured to broadcast a first applicator solution such as a less expensive herbicide, and the first pump system 400a can be configured to spot spray with a second applicator solution (e.g., an herbicide for weeds that is resistant to the first applicator solution).

In still other embodiments, the distributed pump system 400 can comprise a single supply source having a solution reservoir 403 coupled to a charge pump 405 that supplies both the first and second pump systems 400a, 400b as shown in FIG 6. In such an arrangement, the dual application can be achieved by a direct injection of applicator solution via the second pump system 400b just before or after the distribution by fluid distribution elements 404. Further, in either embodiment, the distributed pump system 400 is arranged to allow for smaller sizing of the fluid distribution elements 404.

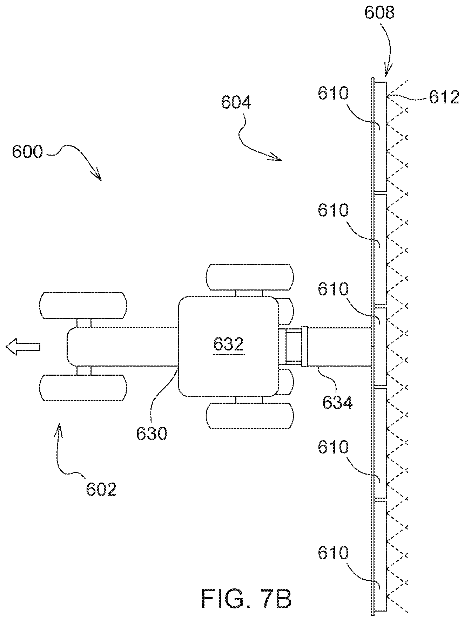

Referring to FIGS. 7A and 7B, exemplary agricultural sprayers 500 and 600 in which the distributed pump systems 100-400 can be incorporated are shown. As depicted, the agricultural sprayers 500 and 600 can comprise an agricultural vehicle 502, 602, a boom assembly 504, 604, which may be attached forward or rearward of the agricultural vehicle 502, 602, and an application system 508, 608 (i.e., application systems 108, 208, 308, or 408) mounted the boom assembly 504, 604. The agricultural vehicle 502, 602 (e.g., a towed sprayer or a self-propelled agricultural sprayer) can comprise a vehicle chassis 530, 630 and a control station 532, 632. A fixed or floating center frame 534, 634 can be coupled to the vehicle chassis 530, 630 and is arranged to provide additional structural support to the boom assembly 504, 604, which may, for example, include an articulated folding spray boom.

As shown in FIG. 7A, a supply source 550, which may include any of the supply sources associated with systems 100-400, can also be coupled to the center frame 534 and can be positioned between the agricultural vehicle 502 and the boom assembly 504. In other embodiments, referring, for example, to FIG. 7B, the supply source can be coupled to the agricultural vehicle 602 (not shown) or arranged external to the system 600.

In the exemplary embodiment of FIGS. 7A and 7B, the application systems 508, 608 are shown as being divided into four sections including application units 510, 610 with each having a plurality of dispensing nozzles 512, 612. Although only four sections are shown, it should be noted that more sections are typically arranged along the boom assembly 504, 604, which can extend up to approximately 25 meters in length in some embodiments. As discussed above with reference to FIGS. 1A-6, the supply of applicator solution to each of application units 510, 610 can be regulated and controlled by fluid distribution elements 104, 204, 304, 404 via the electronic control unit 115. Such an arrangement is particularly advantageous in that it allows for sectional operation of the application system 508, 608 through the selective and independent control of each application unit via the plurality of fluid distribution elements 104, 204, 304, 404 (i.e., each fluid distribution element will control the rate of solution flow into each application unit 510, 610). This in turn will provide for significantly increased spray precision and uniformity and overcomes the deficiencies of conventional approaches.

Without in any way limiting the scope, interpretation, or application of the claims appearing below, a technical effect of one or more of the example embodiments disclosed herein is a distributed pump system for agricultural sprayers. The distributed pump system provides several advantages over conventional systems. For example, the system pump systems provide higher precision and can be configured in such a way to offer both multiple zone and multiple solution applications. The distributed pump system also provides an operator with the ability to simultaneously broadcast and spot spray two different applicator solutions at one time. Further, multiple smaller distributed solution pumps can react quicker to rate changes across the application system than one larger solution pump, and when powered with an electric motor the pump can be controlled quicker and with more stability.

As discussed herein, one or more components of a distributed pump system as disclosed could be used in a planting or seeding application. For example, a pump system can be incorporated into a planter having one or more row units, the pump system being configured to dispense one or more fluid agricultural commodities, such as a liquid fertilizer.

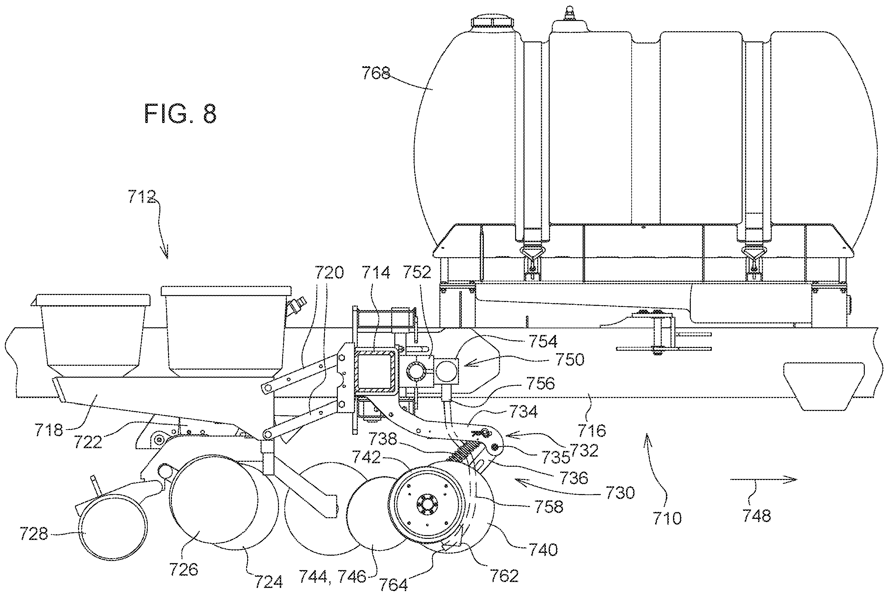

FIG. 8 shows a fluid metering system, e.g., a liquid metering system, installed on implement 10. Implement 710 is a planter but could be a grain drill, air seeder, seedling planter, bulb planter, etc. where it is desired to apply a liquid, such as fertilizer. The metering system will be described in the context of a planter but is not limited to use on a planter, but could be used on an implement dedicated solely to a liquid application.

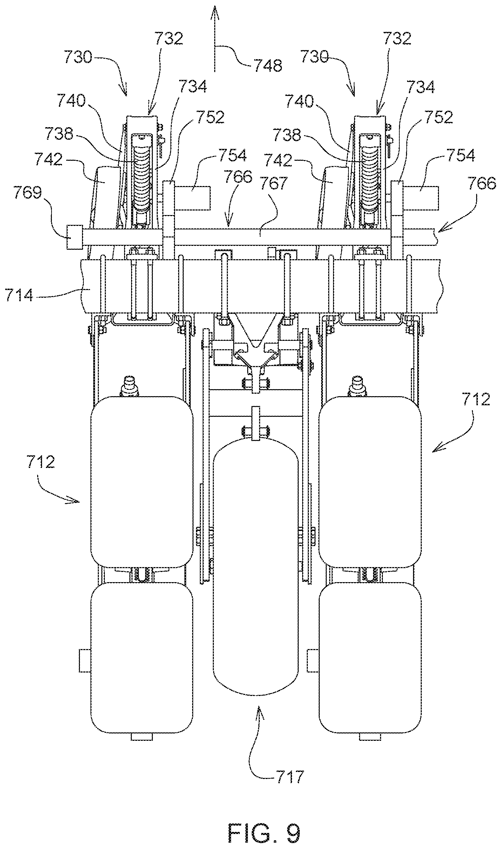

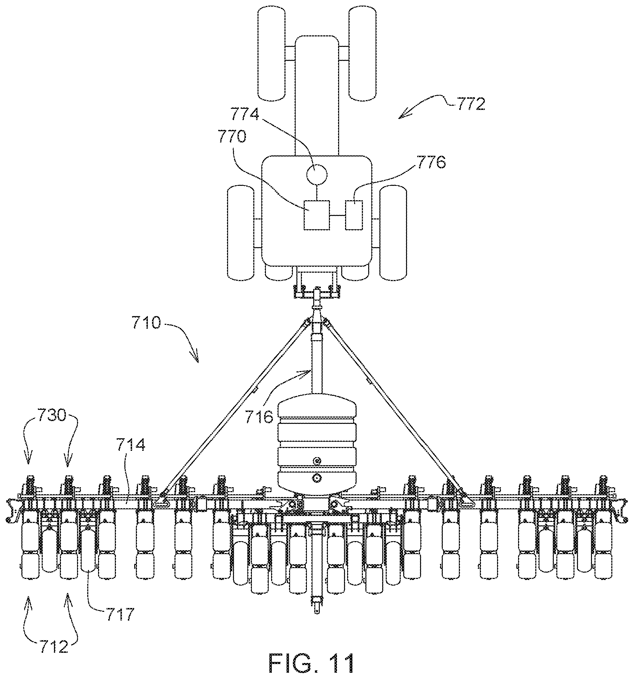

Implement 710 generally includes a plurality of row units 712 with each row unit 712 being substantially identical (although left-hand and right-hand units 712 may be provided, as required for the specific application). Only one row unit 712 is shown in FIG. 8, for simplicity's sake. Each row unit 712 is connected to a tool bar 714 that is part of a frame 716 of the planter/implement. The frame 716 may be provided with multiple support wheel assemblies 717 shown in FIGS. 9 and 11, which may be of conventional design. Furthermore, the frame 716 is coupled to a traction unit, such as an agricultural tractor 772 shown in FIG. 11. The row unit 712 includes a frame 718 mounted to the tool bar 714 through a linkage 720 that allows up and down relative movement between the row unit and tool bar. The row unit frame carries a seed meter 722, furrow opener 724, seed tube (not shown), gauge wheel(s) 726 and a furrow closer 728 for the purpose of planting seed.

As shown, a fertilizer applicator assembly 730 is shown with one assembly 730 provided for each planter row unit 712. The fertilizer applicator assembly includes a frame assembly 732 having a first member 734 coupled to the to the tool bar 714 forward of the row unit 712. A second frame member 736 is rotational mounted to the first frame member 734 at a pivot 735 and is biased downward by a spring 738. A fertilizer opener 740 is carried by a frame member 736. The depth of penetration of the fertilizer opener 740 is controlled by gauge wheel 742 also carried by the frame member 736. Alternatively, the fertilizer opener could be mounted to the row unit frame 712. Other variations in the fertilizer applicator assembly and its mounting to the planter will be readily apparent to those skilled in the art.

The fertilizer applicator assembly 730 opens a trench in the soil into which fertilizer is deposited. In this case a liquid fertilizer is applied. However, the assembly 730 can be adapted to apply dry or gaseous fertilizers in well-known manners. First and closing discs 744, 746 follow closely behind the gauge wheel 742 to close the furrow after the liquid, such as fertilizer, is applied. The fertilizer applicator assembly 730 is only shown as an example implement to which the liquid metering system can be installed. It will be apparent to one of ordinary skill in the art that the various distributed pump and metering systems disclosed herein may be used with any of a variety of fertilizer opener/closer mechanisms. The modular liquid metering system 750 includes, for each fertilizer applicator assembly 730, a metering pump 752 mounted to the tool bar 714. Metering pump 752 can be of a variety of positive displacement pumps. Metering pump 752 is driven by an electric motor 754, which is controlled as described below, to start, stop and vary the rate of liquid delivered by the pump 752. In a preferred embodiment, the pump and motor are integral as a single unit. The pump outlet 756 is connected to a delivery tube 758. A lower end of the tube 758 is attached to a boot/scraper 762, partially shown so as to position the discharge end 764 of the delivery tube 758 within the furrow formed by the fertilizer opener 730 to deliver liquid fertilizer thereto. A nozzle and/or check valve may be provided at the discharge end 764.

While FIG. 8 illustrates the output of pump 752, e.g., discharge end 764, as being included in a fertilizer application assembly 730, the output of pump 752 may be located in any of a number of other locations on a planter. In some embodiments, the output of pump 752 is incorporated into the row unit 712. For the purposes of this disclosure, relative locations on a row unit 712 are defined with respect to the implement working direction shown by arrow 748. In other words, the front of the row unit 712, or any component thereon, is the portion of that row unit 712 that leads the row unit in the implement working direction. Thus, the furrow opener 724 is anterior to the furrow closer 728. In some embodiments, the output of pump 752 may be located, e.g., physically proximate and or configured to dispense a fluid commodity, in front of a row cleaner on the row unit 712. In some embodiments, the output of pump 752 may be located, e.g., physically proximate and or configured to dispense a fluid commodity, behind a row cleaner on the row unit 712. In some embodiments, the output of pump 752 may be located, e.g., physically proximate and or configured to dispense a fluid commodity, laterally to the side of a row cleaner on the row unit 712. In other embodiments, the output of pump 752 may be located, e.g., physically proximate and or configured to dispense a fluid commodity, in front of a furrow opener 724 on the row unit 712. In still other embodiments, the output of pump 752 may be located, e.g., physically proximate and or configured to dispense a fluid commodity, behind a furrow opener 724 on the row unit 712. In yet other embodiments, the output of pump 752 may be located, e.g., physically proximate and or configured to dispense a fluid commodity, laterally to the side of a furrow opener 724 on the row unit 712. In some embodiments, the output of pump 752 may be located, e.g., physically proximate and or configured to dispense a fluid commodity, in front of a gauge wheel(s) 726 on the row unit 712. In some embodiments, the output of pump 752 may be located, e.g., physically proximate and or configured to dispense a fluid commodity, behind a gauge wheel(s) 726 on the row unit 712. In some embodiments, the output of pump 752 may be located, e.g., physically proximate and or configured to dispense a fluid commodity, laterally to the side of a gauge wheel(s) 726 on the row unit 712. In some embodiments, the output of pump 752 may be located, e.g., physically proximate and or configured to dispense a fluid commodity, in front of a seed firmer on the row unit 712. In some embodiments, the output of pump 752 may be located, e.g., physically proximate and or configured to dispense a fluid commodity, behind a seed firmer on the row unit 712. In some embodiments, the output of pump 752 may be located, e.g., physically proximate and or configured to dispense a fluid commodity, laterally to the side of a seed firmer on the row unit 712.In some embodiments, the output of pump 752 may be located, e.g., physically proximate and or configured to dispense a fluid commodity, in front of a furrow closer 728 on the row unit 712. In some embodiments, the output of pump 752 may be located, e.g., physically proximate and or configured to dispense a fluid commodity, behind a furrow closer 728 on the row unit 712. In some embodiments, the output of pump 752 may be located, e.g., physically proximate and or configured to dispense a fluid commodity, laterally to the side of a furrow closer 728 on the row unit 712.

In some embodiments, the delivery tube(s) 758 is a tube having a relatively stiff, incompressible, or inflexible sidewall. For example, the delivery tube(s) 758 may comprise a solid metal tube. Alternatively, the delivery tube(s) 758 may be formed from a standard material but clad in a restricting sheath. In some embodiments, the delivery tubes are braided steel lines. Reducing the radial compliance of the delivery tube(s) 758 may advantageously improve the response time and volumetric accuracy of the fluid metering systems disclosed herein.

The metering system 750 further includes a common supply line 766 attached to the tool bar 714 and extending transversely to the implement working direction shown by arrow 748. Preferably the metering pumps are flow through pump such that they are arranged in-line with the common supply line and form a part thereof. The liquid flows through the pump to those pumps downstream there from. An internal pump inlet receives liquid flowing through the pump body. The common supply line 766 is formed by multiple pumps and extension tubes 767 between each pump. More pumps 752 and extension tubes 767 are added as the machine width increases with more row units. The pump at the downstream end is closed by a cap 769. Alternatively, the common supply line 766 can be equipped with multiple T-fittings coupled to metering pumps that are not part of the common supply line.

The common supply line 766 is coupled to a tank or liquid reservoir 768 in a conventional manner. Liquid from the reservoir 768 is gravity fed to the common supply line 766 and to the individual metering pumps 752, thus eliminating the need for a central pump near the reservoir 768 to deliver metered liquid to each individual row unit. However, for very wide implements, a pump at the reservoir or line 768 may be beneficial to ensure adequate supply of liquid to the individual metering pumps 752. Various shut off valves (not shown) can be placed between the reservoir 766 and the pumps 752 as needed to facilitate servicing of the system if desired.

The common supply line 766 may be a single line extending the width of the implement. If the frame 716 is a folding frame, the supply line 762 may include flexible portions to accommodate the frame folding. Alternatively, each section of the frame may have its own common supply line, each common supply line being connected to the reservoir 768 and adapted to accommodate the frame folding. In such an application, the common supply line on a given section of the frame supplies liquid to all of the metering pumps 752 on that section of the frame.

The metering system 750 is modular in that as the width of the implement increases, the manufacturer adds to the length of the common supply line 766 and adds additional common pumps 752, electric motors 754 and application tubes 758. Each of these are identical for each row, thus the number of different parts and part numbers that a manufacturer or service provider must stock and manage is minimized. This is in contrast to liquid delivery systems that employ a single pump at the reservoir. In such an instance, unique pumps are required for different width implements to meter liquid to differing number of liquid applicator assemblies 730. Various valves, flow dividers, etc. must be employed to meter the desired rate of liquid to each of the rows, making it more difficult to control the application rate at the individual row.

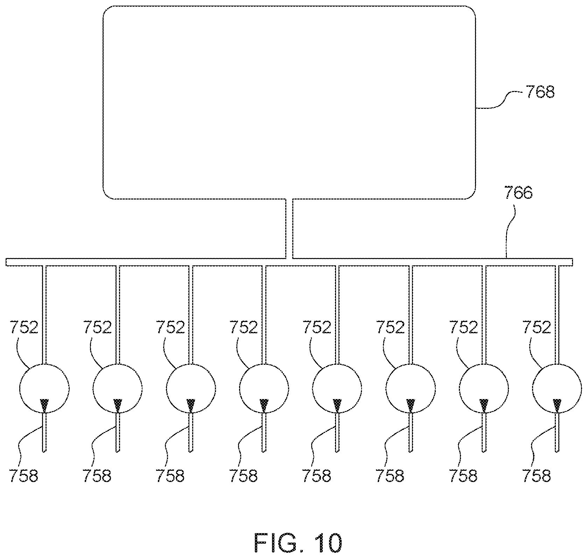

A schematic drawing of the modular liquid metering system 750 is shown in FIG. 10. The simplicity of the system, with individual metering pumps for each row is shown. With reference to Fig. 11, the implement 710 is shown coupled to the tractor 772. Each motor 754 of the metering system 750 is electrically connected to a controller 770, typically mounted to the tractor 772. Also carried by the tractor and coupled to the controller is a GPS receiver 774. The controller has a memory that stores field information including the size and shape of the field in which the implement is operating as well as green areas in the field that do not need liquid application. The field information may also include agronomic information about the field, such as soil type, etc. Application rates for some liquid inputs, such as fertilizer, may vary depending on soil type, etc. The GPS receiver supplies signals to the controller in real time regarding the geospatial location of the implement. The controller uses the signals to determine the location of the implement in the field, the direction of travel and the speed of travel. The controller uses both the GPS and the field information to control the application rate of each pump according to a prescription as the implement is moved through the field. The controller and varies the speed of the motors 754 accordingly, to vary the speed of, or turn on and off, the pumps 752. In addition, the controller 770 uses the field information and the path of the implement to avoid applying liquid on overlaps, headlands, waterways, point rows, etc. where it is not desired to apply the liquid. This reduces input costs and reduces the environmental impact of the use of the liquids.

By locating the pumps at the row unit, a change in the liquid application rate at the pump 752 is almost immediately experienced at the tube discharge end. In addition, long hoses extending form a flow divider to each row unit are avoided and the difficulty in routing such hoses and ensuring all are the same length for metering and avoiding any kinks in the hoses.

Electric power for the motors 754 can be provided by the tractor electrical system or by a separate generator on the tractor or implement. An implement mounted generator could be powered by an engine, PTO, or by ground engaging wheels 717 on the implement, etc. The application rate by location for each pump can be recorded by the controller and the data used for management of the field. In addition, the application rate can be displayed to the operator by a display 776 on the tractor 772.

While electric motors are disclosed as variable speed drive mechanisms to drive the pumps 752, it will be understood that other variable speed drive mechanisms may be used in place of the electric motors such as, but not limited to, hydraulic motors, variable speed mechanical transmissions, etc.

As discussed above, metering pump 752 can be of a variety of pump types and can be driven by an electric motor 754. The electric motor 754 driving the pumps 752 may be electrically connected to a controller 770, which is controlled to start, stop, and vary the rate of liquid delivered by the pump 752. Generally speaking, each pump 752 included on the implement can be paired with an electric motor 754. For example, on a 36-row planter with on-row fertilizer capability, each of the 36 row units includes both a pump 752 and an electric motor754, which may be in data or electrical communication with a controller. Thus, such 36-row planter could have a total of 36 pump/motor assemblies. However, other ratios are possible. In some embodiments, the fluid metering system on an agricultural implement has one pump 752 per every row unit. In other embodiments, the fluid metering system on an agricultural implement has one pump 752 per every two row units 712. In other embodiments, the fluid metering system on an agricultural implement has one pump 752 per every three row units 712. In other embodiments, the fluid metering system on an agricultural implement has one pump 752 per every four, five, or six row units 712. In some embodiments, more than one pump 752 may be included on each row unit 712. More than one pump 752 may be included on each row unit 712 to dispense more than one fluid commodity at each row unit 712. More than one pump 752 may be included on each row unit row unit 712 to dispense one or more fluid commodities at a higher volumetric flow rate.

Each pump 752 and motor 754 assembly has a maximum dispensing frequency of X, e.g., maximum rate at which the assembly is sufficiently accurate and precise or maximum rate at which the assembly is capable of operating without experiencing undue wear, etc. One or more pump 752 and motor 754 assemblies may be included on the same row unit 712 to effectively increase the rate of dispensing of the dispensed commodity. When two pump 752 and motor 754 assemblies, e.g., each having a maximum dispensing rate of X, are included on the row unit 712, actuating the assemblies out of phase or in a staggered manner allows dispensing the fluid commodity at a maximum rate of 2X. In much the same way, including three pump 752 and motor 754 assemblies, e.g., each having a maximum dispensing rate of X, on a single row unit 712 allows a maximum dispensing rate of 3X when the assemblies are actuated out of phase or in a staggered manner. In some embodiments, two pumps 752 are included on each row unit 712, which may allow a maximum dispensing rate equivalent to the sum of the maximum dispensing rates of both pumps 752. In some embodiments, three pumps 752 are included on each row unit 712, which may allow a maximum dispensing rate equivalent to the sum of the maximum dispensing rates of all three pumps 752. In some embodiments, four pumps 752 are included on each row unit 712, which may allow a maximum dispensing rate equivalent to the sum of the maximum dispensing rates of all four pumps 752. In other embodiments, more than four pumps 752 are included on each row unit 712.

In operation, the controller can signal the electric motor(s) 754 of the fluid metering system, e.g., vary the speed of the motors 754. Varying the speed of the motors 754, can consequently vary the speed of, or turn on and off, the pumps 752. The controller 770 may be configured to use one or more inputs, such as weather, crop, geographic, implement path, or other information to modulate the speed of the motors 754 (and pumps), thereby advantageously avoiding unnecessary application or over-application of the fluid. A continuous signal provided by the controller to the motors 754 may result in a continuous band of commodity dispensed from the discharge end 764 of the delivery tube 758, e.g., fertilizer metered as a continuous band in the soil. A discontinuous signal provided by the controller to the motor 754 may result in a discontinuous band of commodity dispensed in a non-continuous or discontinuous band of commodity dispensed from the discharge end 764 of the delivery tube 758, e.g., fertilizer metered in a non-continuous or discontinuous band in the soil. Any of a number of other speed signals may be sent from the controller to the motors 754. In some embodiments, the controller sends or is configured to send a signal indicative of increasing speed to the motors 754, e.g., to increase the motors' 754 speed and thereby the output of the pumps 752. A signal indicative of increasing speed may comprise one or more of a linearly increasing speed and a non-linearly increasing speed. In some embodiments, the controller sends or is configured to send a signal indicative of decreasing speed to the motors 754, e.g., to decrease the motors' 754 speed and thereby the output of the pumps 752. A signal indicative of decreasing speed may comprise one or more of a linearly decreasing speed and a non-linearly decreasing speed. In some embodiments, the signal indicative of increasing and/or decreasing speed may correlate to the travel speed of the row unit 712. In that way, less commodity may be dispensed when the row unit 712 is traveling at a slower speed and more commodity may be dispensed when the row unit 712 is traveling at a faster speed. Thus, the row unit 712 may be configured to dispense a substantially constant volume of commodity regardless of implement speed.

While the pump 752 and motor 754 assembly may be controlled merely by sending motor speed signals from a controller, e.g., controller 770, to the motor 754, which drives the pump 752 at a rate proportional to the speed signal received from the controller, other types of signaling or control methods may be used. In some embodiments, the electric motor, e.g., motor 754, used in the pump and motor assembly is a precise and/or accurate motor, e.g., a positional motor, that may accept or is configured to accept a position-related signal and act on or respond to that position-related signal. In some embodiments, the controller controls or modulates the position of the positional motor, providing the positional motor instructions, e.g., signaling the positional motor to change position, as to changes in motor position. In some embodiments, the controller controls or modulates the speed of the positional motor, providing the positional motor instructions, e.g., signaling the positional to change speed, as to changes in motor speed. In other embodiments, the controller controls or modulates both the position of the positional motor and the speed of the positional motor. When the controller controls or modulates both the position of the positional motor and the speed of the positional motor, the controller may send positional instructions to the positional motor at a different time from speed instructions. When the controller controls or modulates both the position of the positional motor and the speed of the positional motor, the controller may send positional instructions to the positional motor at the same time as speed instructions.

In some embodiments, the positional motor, e.g., motor 754, is a motor having angular position control, e.g., a stepper motor. In such embodiments, the angular position of the positional motor may be controlled, e.g., precisely controlled. As the positional motor is operatively coupled to the pump 752 (which may be a positive displacement pump), a change in the position of the positional motor, e.g., a change in the angular position of the positional motor, effects a corresponding action by the pump 752, which results in a volume of commodity being dispensed by the pump 752. The positional motor may be operatively coupled to the pump in a direct drive. In some embodiments, the positional motor is coupled to the pump 752 via a direct drive, e.g., a 1:1 gearing ratio. In some embodiments, the positional motor is coupled to the pump 752 via an indirect, geared up drive. In other embodiments, the positional motor is coupled to the pump 752 via an indirect, geared down drive. One or more of motors, pumps, including but not limited to pump displacement, gearings, and downstream orificing may be used to fine-tune the volume(s) dispensed for a given change in position, e.g., angular position, of the positional motor.

In some embodiments, the positional motor is configured to receive angular position commands from a controller, e.g., the controller may send and the positional motor receive an instruction for the positional motor to change angular position by a given value, and the positional motor is configured to respond precisely to such command. For example, the positional motor may respond substantially exactly to a positional command received from the controller, e.g., the positional motor changes position in an amount substantially equivalent to that commanded by the controller (about 100% accurate). In some embodiments, and depending on any gearing included, the relationship between positional motor response and controller command is greater than about 90%, greater than about 91%, greater than about 92%, greater than about 93%, greater than about 94%, greater than about 95%, greater than about 96%, greater than about 97%, greater than about 98%, or greater than about 99%, or any other percent accuracy or responsiveness that may benefit the fluid metering system. In some embodiments, and depending on any gearing included, the accuracy and responsiveness of the positional motor to a command by the controller (e.g., the ratio of motor position change to change instructed by the controller), is greater than about 97%, greater than about 97.2%, greater than about 97.4%, greater than about 97.6%, greater than about 97.8%, greater than about 98%, greater than about 98.2%, greater than about 98.4%, greater than about 98.6%, greater than about 98.8%, greater than about 99%, greater than about 99.2%, greater than about 99.4%, greater than about 99.6%, or greater than about 99.8%. In some embodiments, and depending on any gearing included, the accuracy and responsiveness of the positional motor to a command by the controller, is greater than about 99.05%, greater than about 99.1%, greater than about 99.15%, greater than about 99.2%, greater than about 99.25%, greater than about 99.3%, greater than about 99.35%, greater than about 99.4%, greater than about 99.45%, greater than about 99.5%, greater than about 99.55%, greater than about 99.6%, greater than about 99.65%, greater than about 99.7%,. greater than about 99.75%, greater than about 99.8%, greater than about 99.85%, greater than about 99.9%, or greater than about 99.95%, or any other responsiveness than benefits the fluid metering system.

It will be understood that the volume of fluid commodity dispensed for a given change in position, e.g., angular position, of the positional motor may be arbitrary and dependent factors such as, but not limited to, the displacement of the pump and any gearing between the positional motor and the pump. However, the volume of fluid commodity dispensed by the pump for a given change in position may remain substantially constant for a given change in position of the positional motor. For example, the magnitude of position change, e.g., the number of degrees of rotation, may correlate to the amount of fluid dispensed, with pump displacement and downstream orificing providing other ways to control flow rate.

The positional motor to pump responsiveness, e.g., the relationship between position change of the positional motor (angular position change) and the volume dispensed by the pump 752, may be very accurate, e.g., have a low error. In some embodiment, the positional motor to pump responsiveness has an error rate of less than about ±20%, less than about ±18%, less than about ±16%, less than about ±14%, less than about ±12%, less than about ±10%, less than about ±8%, less than about ±6%, less than about ±4%, or less than about ±2%. In some embodiments, the positional motor to pump responsiveness has an error rate of less than about ±15%, less than about ±14%, less than about ±13%, less than about ±12%, less than about ±11%, less than about ±10%, less than about ±9%, less than about ±8%, less than about ±7%, less than about ±6%, less than about ±5%, less than about ±4%, less than about ±3%, less than about ±2%, or less than about ±1%. In some embodiments, the positional motor to pump responsiveness has an error rate of less than about ±10%, less than about ±9.5%, less than about ±9%, less than about ±8.5%, less than about ±8%, less than about ±7.5%, less than about ±7%, less than about ±6.5%, less than about ±6%, less than about ±5.5%, less than about ±5%, less than about ±4.5%, less than about ±4%, less than about ±3.5%, less than about ±3%, less than about ±2.5%, less than about ±2%, less than about ±1.5%, less than about ±1%, less than about ±0.5%. In some embodiments, the positional motor to pump responsiveness has an error rate of less than about ±2.5%, less than about ±2.4%, less than about ±2.3%, less than about ±2.2%, less than about ±2.1%, less than about ±2.0%, less than about ±1.9%, less than about ±1.8%, less than about ±1.7%, less than about ±1.6%, less than about ±1.5%, less than about ±1.4%, less than about ±1.3%, less than about ±1.2%, less than about ±1.1%, less than about ±1.0%, less than about ±0.9%, less than about ±0.8%, less than about ±0.7%, less than about ±0.6%, less than about ±0.5%, less than about ±0.4%, less than about ±0.3%, less than about ±0.2%, or less than about ±0.1%. In some embodiments, the positional motor to pump responsiveness has an error rate of less than about ±1.0%, less than about ±0.95%, less than about ±0.9%, less than about ±0.85%, less than about ±0.8%, less than about ±0.75%, less than about ±0.7%, less than about ±0.65%, less than about ±0.6%, less than about ±0.55%, less than about ±0.5%, less than about ±0.45%, less than about ±0.4%, less than about ±0.35%, less than about ±0.3%, less than about ±0.25%, less than about ±0.2%, less than about ±0.15%, less than about ±0.1%, or less than about ±0.05%.

As discussed herein, commands issued by the controller and received by the positional motor include a positional component. However, such commands may include other components, including, but not necessarily limited to, a temporal component. Any temporal component issued by the controller may advantageously be responsive, at least in part, to the speed of the row unit (and therefore, the discharge end 764 dispensing any commodity). It will be understood that application of commodity is generally performed in a volume per distance (or area) function. Such function requires knowledge of both the volume dispensed and distance over which that volume is dispensed. Volume dispensed may be merely a function of the positional change of the positional motor. However, distance is a function of both the travel speed of the row unit and the time across which the volume of commodity is dispensed. Each of these variables may be known to the controller: the controller commands the positional motor to dispense a given volume; the controller commands the positional motor the time in which it must dispense the given volume; and the controller may receive the travel speed of the row unit, e.g., from a tractor or a GPS device.

The positional component of a controller command dictates the total volume of commodity that will be dispensed by the pump 752, regardless of time. For example, the positional motor may be commanded to dispense (e.g., via the pump 752) 10 gallons (an arbitrary value, provided for illustration purposes only) of commodity. That 10 gallons could be dispensed across 10 feet, likely a dramatic overapplication of commodity. Alternatively, that 10 gallons could be dispensed across 10 miles, likely a dramatic underapplication of commodity.

The temporal component of a controller command dictates the time in which commodity will be dispensed, regardless of volume (or distance). For example, the positional motor may be commanded to dispense commodity for one minute. That 1 minute dispensing could result in 1 gallon or 10 gallons (arbitrary values, provided for illustration purposes only) being dispensed across 1 foot or 1 mile (arbitrary values, provided for illustration purposes only). The speed of the row unit, e.g., the speed at which the commodity is being dispensed may be used by the controller to provide a distance. For example, an application time of 1 minute at a speed of 5 miles per hour results in an application distance of 440 feet. The controller may use such a calculated distance in connection with its positional component to precisely meter fluid commodity in a volume per distance fashion. In some embodiments, the positional motor includes an integrated position sensor for detecting the position of the motor, e.g., the angular position or location of the motor. Such an integrated position sensor may advantageously report to the controller one or more of the actual position of the motor, e.g., in response to the instructed position, and the time required to move the motor from its initial position to its instructed position. Reporting the time required to move the motor to the controller may advantageously allow the system to adjust for or calibrate to inherent delays or motor acceleration. The inertia associated with moving the positional motor and/or fluid may be a source of error or inaccuracy in some systems disclosed herein. Therefore, managing, e.g., accounting for, calibrating for, or controlling for, acceleration of the positional motor may advantageously allow lagless delivery / metering of the fluid commodity from the pump and/or discharge end 764.

For example, the controller may send a command that includes both a positional change and a time in which that positional change is to be accomplished. A temporal component of commands issued by the controller can allow the controller to effectively produce a discontinuous dispensing of commodity by the pump, e.g., the time between rotations (rotating or not rotating) would reflect the application frequency. As discussed herein, the dispensing or application frequency may be synchronized with seeding frequency to delivery commodity, e.g., fertilizer, in a specific relationship to the seed (e.g., the commodity may be dispensed only on the seed or the commodity may be dispensed only between the seeds). In much the same way, a temporal component of commands issued by the controller can allow the controller to effectively produce a continuous dispensing of commodity by the pump, e.g., the positional motor may be commanded to change position by a certain amount in a given time increment across a predetermined number of such time increments. In other words, the positional motor could be commanded at a given rpm which would deliver fluid in a continuous band in or out of the soil.

In some embodiments, the controller is configured to identically control all positional motors, e.g., one or more positional motors per row unit 712, e.g., each positional motor receives the same command(s) from the controller. In some embodiments, the controller is configured to control groups of positional motors individually, e.g., all positional motors on a given row unit 712 receive the same commands, but different groups of positional motors on different row units 712 may receive different commands. Such control may allow advantageous features such as curve compensation, e.g., pumps on an outer row unit 712 may dispense faster than pumps on inner row units 712. In some embodiments, the controller is configured to control each positional motor individually. Such control may allow advantageous features, such as intra-row pump phase staggering to achieve high rates of discontinuous application.

As discussed elsewhere herein, various sensors may be incorporate upstream and/or downstream of the pump/motor assemblies. For example, a pressure sensor may be included upstream of the pump/motor assembly. A pressure sensor may be included downstream of the pump/motor assembly. One or more of upstream sensor(s) and downstream sensor(s) may provide sensed data, e.g., pressure differential data, to the controller. The controller may use the sensed data for any of a number of purposes. For example, the controller may use the sensed data as confirmation of flow rate and successful commodity application. The controller may use the sensed data, e.g., pressure differential to calibrate the positional motor. The controller may use the sensed data to both map and closed-loop feedback continuously calibrate the positional motor.

The various distributed pump and fluid metering systems disclosed herein may advantageously be used for valveless dispensing of an agricultural commodity. Elimination of valves may advantageously reduce cost and/or system complexity. Conventional systems rely on one or more pumps to generate a pressure differential, but then meter the agricultural commodity using valves. One or more of the systems disclosed herein entirely removes such valves and dispenses commodity merely by turning running a per commodity-line pump in a highly reproducible, precise, accurate, and temporally appropriate manner.

The foregoing description and examples has been set forth merely to illustrate the disclosure and are not intended as being limiting. Each of the disclosed aspects and embodiments of the present disclosure may be considered individually or in combination with other aspects, embodiments, and variations of the disclosure. In addition, unless otherwise specified, none of the steps of the methods of the present disclosure are confined to any particular order of performance. Modifications of the disclosed embodiments incorporating the spirit and substance of the disclosure may occur to persons skilled in the art and such modifications are within the scope of the present disclosure. Furthermore, all references cited herein are incorporated by reference in their entirety.

Terms of orientation used herein, such as "top," "bottom," "horizontal," "vertical," "longitudinal," "lateral," and "end" are used in the context of the illustrated embodiment. However, the present disclosure should not be limited to the illustrated orientation. Indeed, other orientations are possible and are within the scope of this disclosure. Terms relating to circular shapes as used herein, such as diameter or radius, should be understood not to require perfect circular structures, but rather should be applied to any suitable structure with a cross-sectional region that can be measured from side-to-side. Terms relating to shapes generally, such as "circular" or "cylindrical" or "semi-circular" or "semi-cylindrical" or any related or similar terms, are not required to conform strictly to the mathematical definitions of circles or cylinders or other structures, but can encompass structures that are reasonably close approximations.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain embodiments, as the context may dictate, the term "generally parallel" can refer to something that departs from exactly parallel by less than or equal to 20 degrees.

Unless otherwise explicitly stated, articles such as "a" or "an" should generally be interpreted to include one or more described items. Accordingly, phrases such as "a device configured to" are intended to include one or more recited devices. Such one or more recited devices can be collectively configured to carry out the stated recitations. For example, "a processor configured to carry out recitations A, B, and C" can include a first processor configured to carry out recitation A working in conjunction with a second processor configured to carry out recitations B and C.

The terms "comprising," "including," "having," and the like are synonymous and are used inclusively, in an open-ended fashion, and do not exclude additional elements, features, acts, operations, and so forth. Likewise, the terms "some," "certain," and the like are synonymous and are used in an open-ended fashion. Also, the term "or" is used in its inclusive sense (and not in its exclusive sense) so that when used, for example, to connect a list of elements, the term "or" means one, some, or all of the elements in the list.

Overall, the language of the claims is to be interpreted broadly based on the language employed in the claims. The language of the claims is not to be limited to the nonexclusive embodiments and examples that are illustrated and described in this disclosure, or that are discussed during the prosecution of the application.

Although systems and methods for precise distribution of fluidic agricultural commodities have been disclosed in the context of certain embodiments and examples, this disclosure extends beyond the specifically disclosed embodiments to other alternative embodiments and/or uses of the embodiments and certain modifications and equivalents thereof. Various features and aspects of the disclosed embodiments can be combined with or substituted for one another in order to form varying modes of systems and methods for precise distribution of fluidic agricultural commodities. The scope of this disclosure should not be limited by the particular disclosed embodiments described herein.

Certain features that are described in this disclosure in the context of separate implementations can be implemented in combination in a single implementation. Conversely, various features that are described in the context of a single implementation can be implemented in multiple implementations separately or in any suitable subcombination. Although features may be described herein as acting in certain combinations, one or more features from a claimed combination can, in some cases, be excised from the combination, and the combination may be claimed as any subcombination or variation of any subcombination.

While the methods and devices described herein may be susceptible to various modifications and alternative forms, specific examples thereof have been shown in the drawings and are herein described in detail. It should be understood, however, that the invention is not to be limited to the particular forms or methods disclosed, but, to the contrary, the invention is to cover all modifications, equivalents, and alternatives falling within the scope of the various embodiments described and the appended claims. Further, the disclosure herein of any particular feature, aspect, method, property, characteristic, quality, attribute, element, or the like in connection with an embodiment can be used in all other embodiments set forth herein. Any methods disclosed herein need not be performed in the order recited. Depending on the embodiment, one or more acts, events, or functions of any of the algorithms, methods, or processes described herein can be performed in a different sequence, can be added, merged, or left out altogether (e.g., not all described acts or events are necessary for the practice of the algorithm). In some embodiments, acts or events can be performed concurrently, e.g., through multi-threaded processing, interrupt processing, or multiple processors or processor cores or on other parallel architectures, rather than sequentially. Further, no element, feature, block, or step, or group of elements, features, blocks, or steps, are necessary or indispensable to each embodiment. Additionally, all possible combinations, subcombinations, and rearrangements of systems, methods, features, elements, modules, blocks, and so forth are within the scope of this disclosure. The use of sequential, or time-ordered language, such as "then," "next," "after," "subsequently," and the like, unless specifically stated otherwise, or otherwise understood within the context as used, is generally intended to facilitate the flow of the text and is not intended to limit the sequence of operations performed. Thus, some embodiments may be performed using the sequence of operations described herein, while other embodiments may be performed following a different sequence of operations.

Moreover, while operations may be depicted in the drawings or described in the specification in a particular order, such operations need not be performed in the particular order shown or in sequential order, and all operations need not be performed, to achieve the desirable results. Other operations that are not depicted or described can be incorporated in the example methods and processes. For example, one or more additional operations can be performed before, after, simultaneously, or between any of the described operations. Further, the operations may be rearranged or reordered in other implementations. Also, the separation of various system components in the implementations described herein should not be understood as requiring such separation in all implementations, and it should be understood that the described components and systems can generally be integrated together in a single product or packaged into multiple products. Additionally, other implementations are within the scope of this disclosure.

Some embodiments have been described in connection with the accompanying figures. Certain figures are drawn and/or shown to scale, but such scale should not be limiting, since dimensions and proportions other than what are shown are contemplated and are within the scope of the embodiments disclosed herein. Distances, angles, etc. are merely illustrative and do not necessarily bear an exact relationship to actual dimensions and layout of the devices illustrated. Components can be added, removed, and/or rearranged. Further, the disclosure herein of any particular feature, aspect, method, property, characteristic, quality, attribute, element, or the like in connection with various embodiments can be used in all other embodiments set forth herein. Additionally, any methods described herein may be practiced using any device suitable for performing the recited steps.

The methods disclosed herein may include certain actions taken by a practitioner; however, the methods can also include any third-party instruction of those actions, either expressly or by implication. For example, actions such as "positioning an electrode" include "instructing positioning of an electrode."

The ranges disclosed herein also encompass any and all overlap, subranges, and combinations thereof. Language such as "up to," "at least," "greater than," "less than," "between," and the like includes the number recited. Numbers preceded by a term such as "about" or "approximately" include the recited numbers and should be interpreted based on the circumstances (e.g., as accurate as reasonably possible under the circumstances, for example ±5%, ±10%, ±15%, etc.). For example, "about 1 V" includes "1 V." Phrases preceded by a term such as "substantially" include the recited phrase and should be interpreted based on the circumstances (e.g., as much as reasonably possible under the circumstances). For example, "substantially perpendicular" includes "perpendicular." Unless stated otherwise, all measurements are at standard conditions including temperature and pressure.

In summary, various embodiments and examples of systems and methods for precise distribution of fluidic agricultural commodities have been disclosed. Although the systems and methods for precise distribution of fluidic agricultural commodities have been disclosed in the context of those embodiments and examples, this disclosure extends beyond the specifically disclosed embodiments to other alternative embodiments and/or other uses of the embodiments, as well as to certain modifications and equivalents thereof. This disclosure expressly contemplates that various features and aspects of the disclosed embodiments can be combined with, or substituted for, one another. Thus, the scope of this disclosure should not be limited by the particular disclosed embodiments described herein, but should be determined by the claims that follow.

## Claims

1. A method of precisely dispensing an agricultural commodity using an agricultural implement (500, 502, 600, 710), the method comprising:
determining a volume of the agricultural commodity to be dispensed;
correlating the volume of the agricultural commodity to be dispensed with a change in a position of a positional motor (754), the positional motor (754) operatively coupled to a pump (104, 204, 304, 404, 752);
after correlating the volume of the agricultural commodity to be dispensed with the change in the position of the positional motor (754), sending a command to the positional motor (754), the command comprising a positional component proportional to the change in the position of the positional motor (754);
changing the position of the positional motor (754) in response to the positional component of the command;
driving the pump (104, 204, 304, 404, 752) in response to the changing of the position of the positional motor (754) in response to the positional component of the command; and
dispensing the volume of the agricultural commodity in response to driving the pump (104, 204, 304, 404, 752);
determining a time value over which the agricultural commodity is to be dispensed, wherein the command sent to the positional motor (754) comprises a temporal component proportional to the time value over which the agricultural commodity is to be dispensed; and
changing the position of the positional motor (754) in response to the temporal component of the command.

2. The method of precisely dispensing an agricultural commodity of Claim 1, wherein changing the position of the positional motor (754) comprises changing an angular position of the positional motor (754).

3. The method of precisely dispensing an agricultural commodity of Claim 1 or 2, wherein correlating the volume of the agricultural commodity to be dispensed with a change in a position of a positional motor (754) comprises determining the change in the position of the positional motor (754) necessary to dispense the volume of the agricultural commodity.

4. The method of precisely dispensing an agricultural commodity of one of the claims 1 to 3, wherein changing the position of the positional motor (754) in response to the temporal component of the command comprises changing the position of the positional motor (754) in response to the positional component of the command within the time value over which the agricultural commodity is to be dispensed.

5. The method of precisely dispensing an agricultural commodity of one of the claims 1 to 4, further comprising determining a forward rate of travel of an agricultural implement (500, 600, 710) from which the agricultural commodity is to be dispensed.

6. The method of precisely dispensing an agricultural commodity of claim 5, wherein the temporal component of the command is responsive to the forward rate of travel of the agricultural implement (500, 600, 710) from which the agricultural commodity is to be dispensed.

7. Agricultural implement (710) having a plurality of row units (712) and a commodity metering system (750), the commodity metering system (750) comprising:
a commodity reservoir (768) for holding a quantity of a commodity;
a plurality of pumps (752), wherein at least one pump (752) is located at each row unit (712) of the plurality of row units (712), and wherein each pump (752) of the plurality of pumps (752) is in fluid communication with the commodity reservoir (768);
a plurality of dispensing tubes (758), each dispensing tube (758) of the plurality tubes (758) having a first end (756) and a second end (764), the first end (756) of each dispensing tube (758) being associated with and in fluid communication with one pump (752) of the plurality of pumps (752) and the second end (764) of each dispensing tube (758) being configured to dispense the commodity;
a plurality of positional motors (754), wherein at least one positional motor (754) is located at each row unit (712) of the plurality of row units (712), and wherein each positional motor (754) of the plurality of positional motors (754) is associated with one pump (752) of the plurality of pumps (752);
a controller (115, 770) configured to send commands to the plurality of positional motors (754), the commands comprising a motor position component; and wherein each positional motor (754) of the plurality of positional motors (754) is configured to receive commands from the controller (770) and change a position of the motor (754) in response to the motor position component, wherein the controller is configured to perform the dispensation of commodity according to the method of one of the claims 1 to 6

8. Agricultural sprayer system (500, 502, 600), having a distributed pump system (100, 200, 300, 400) with a plurality of pumps (104, 204, 304, 404) and a commodity metering system comprising:
a reservoir (103) for holding a commodity;
a plurality of positional motors, each positional motor of the plurality of positional motors being operatively coupled to one pump (104, 204, 304, 404) of the plurality of pumps (104, 204, 304, 404), wherein each positional motor of the plurality of positional motors is configured to change angular position in response to a positional command;
at least one common supply line providing fluid communication between the reservoir and the plurality of pumps (104, 204, 304, 404);
a dispensing line extending from and in fluid communication with each pump (104, 204, 304, 404) of the plurality of pumps (104, 204, 304, 404); and
a controller (115) configured to send positional commands to the plurality of positional motors; wherein the controller is configured to perform the dispensation of commodity according to the method of one of the claims 1 to 6.

## Patentansprüche

1. Verfahren zum genauen Ausbringen eines landwirtschaftlichen Verbrauchsguts mit Hilfe eines landwirtschaftlichen Arbeitsgeräts (500, 502, 600, 710), wobei das Verfahren Folgendes umfasst:
Bestimmen eines Volumens des auszubringenden landwirtschaftlichen Verbrauchsgutes,
In-Beziehung-Setzen des Volumens des auszubringenden landwirtschaftlichen Verbrauchsguts mit einer Veränderung einer Position eines Positionsmotors (754), wobei der Positionsmotor (754) funktionsfähig mit einer Pumpe (104, 204, 304, 404, 752) gekoppelt ist,
nach dem In-Beziehung-Setzen des Volumens des auszubringenden landwirtschaftlichen Verbrauchsgutes mit der Veränderung der Position des Positionsmotors (754) Senden eines Befehls an den Positionsmotor (754), wobei der Befehl eine zur Veränderung der Position des Positionsmotors (754) proportionale Positionskomponente umfasst,
Verändern der Position des Positionsmotors (754) in Reaktion auf die Positionskomponente des Befehls,
Antreiben der Pumpe (104, 204, 304, 404, 752) in Reaktion auf die Veränderung der Position des Positionsmotors (754) in Reaktion auf die Positionskomponente des Befehls und
Ausbringen des Volumens des landwirtschaftlichen Verbrauchsgutes in Reaktion auf das Antreiben der Pumpe (104, 204, 304, 404, 752),
Bestimmen eines Zeitwertes, über den das landwirtschaftliche Verbrauchsgut auszubringen ist, wobei der an den Positionsmotor (754) gesendete Befehl eine zeitliche Komponente umfasst, die proportional zu dem Zeitwert ist, über den das landwirtschaftliche Verbrauchsgut auszubringen ist, und
Verändern der Position des Positionsmotors (754) in Reaktion auf die zeitliche Komponente des Befehls.

2. Verfahren zum genauen Ausbringen eines landwirtschaftlichen Verbrauchsguts nach Anspruch 1, wobei das Verändern der Position des Positionsmotors (754) das Verändern einer Winkelposition des Positionsmotors (754) umfasst.

3. Verfahren zum genauen Ausbringen eines landwirtschaftlichen Verbrauchsguts nach Anspruch 1 oder 2, wobei das In-Beziehung-Setzen des Volumens des auszubringenden landwirtschaftlichen Verbrauchsguts mit einer Veränderung einer Position eines Positionsmotors (754) das Bestimmen der für das Ausbringen des Volumens des landwirtschaftlichen Verbrauchsgutes erforderlichen Veränderung der Position des Positionsmotors (754) umfasst.

4. Verfahren zum genauen Ausbringen eines landwirtschaftlichen Verbrauchsguts nach einem der Ansprüche 1 bis 3, wobei das Verändern der Position des Positionsmotors (754) in Reaktion auf die zeitliche Komponente des Befehls das Verändern der Position des Positionsmotors (754) in Reaktion auf die Positionskomponente des Befehls innerhalb des Zeitwertes umfasst, über den das landwirtschaftliche Verbrauchsgut auszubringen ist.

5. Verfahren zum genauen Ausbringen eines landwirtschaftlichen Verbrauchsguts nach einem der Ansprüche 1 bis 4, ferner das Bestimmen einer Geschwindigkeit der Vorwärtsbewegung eines landwirtschaftlichen Arbeitsgeräts (500, 600, 710) umfasst, aus dem das landwirtschaftliche Verbrauchsgut auszubringen ist.

6. Verfahren zum genauen Ausbringen eines landwirtschaftlichen Verbrauchsguts nach Anspruch 5, wobei die zeitliche Komponente des Befehls auf die Geschwindigkeit der Vorwärtsbewegung des landwirtschaftlichen Arbeitsgeräts (500, 600, 710) reagiert, aus dem das landwirtschaftliche Verbrauchsgut auszubringen ist.

7. Landwirtschaftliches Arbeitsgerät (710), mehrere Reiheneinheiten (712) und ein Verbrauchsgut-Bemessungssystem (750) aufweisend, wobei das Verbrauchsgut-Bemessungssystem (750) Folgendes umfasst:
einen Verbrauchsgutbehälter (768) zum Halten einer Menge an Verbrauchsgut,
mehrere Pumpen (752), wobei sich an jeder Reiheneinheit (712) der mehreren Reiheneinheiten (712) mindestens eine Pumpe (752) befindet und wobei jede Pumpe (752) der mehreren Pumpen (752) in Fluidverbindung mit dem Verbrauchsgutbehälter (768) steht,
mehrere Ausbringungsrohre (758), wobei jedes Ausbringungsrohr (758) der mehreren Ausbringungsrohre (758) ein erstes Ende (756) und ein zweites Ende (764) aufweist, wobei das erste Ende (756) jedes Ausbringungsrohrs (758) einer Pumpe (752) der mehreren Pumpen (752) zugeordnet und mit dieser verbunden ist, und das zweite Ende (764) jedes Ausbringungsrohrs (758) dafür gestaltet ist, das Verbrauchsgut auszubringen,
mehrere Positionsmotoren (754), wobei sich in jeder Reiheneinheit (712) der mehreren Reiheneinheiten (712) mindestens ein Positionsmotor (754) befindet und wobei jeder Positionsmotor (754) der mehreren Positionsmotoren (754) einer Pumpe (752) der mehreren Pumpen (752) zugeordnet ist,
eine Steuerung (115, 770), die dafür gestaltet ist, Befehle an die mehreren Positionsmotoren (754) zu senden, wobei die Befehle eine Motorpositionskomponente umfassen und wobei jeder Positionsmotor (754) der mehreren Positionsmotoren (754) dafür gestaltet ist, Befehle von der Steuerung (770) zu empfangen und in Reaktion auf die Motorpositionskomponente eine Position des Motors (754) zu verändern, wobei die Steuerung dafür gestaltet ist, das Ausbringen von Verbrauchsgut gemäß dem Verfahren nach einem der Ansprüche 1 bis 6 durchzuführen.

8. Landwirtschaftliches Sprühsystem (500, 502, 600), ein System (100, 200, 300, 400) verteilter Pumpen mit mehreren Pumpen (104, 204, 304, 404) und ein Verbrauchsgut-Bemessungssystem aufweisend, das Folgendes umfasst:
einen Verbrauchsgutbehälter (103) zum Halten eines Verbrauchsguts,
mehrere Positionsmotoren, wobei jeder Positionsmotor der mehreren Positionsmotoren funktionsfähig mit einer Pumpe (104, 204, 304, 404) der mehreren Pumpen (104, 204, 304, 404) gekoppelt ist, wobei jeder Positionsmotor der mehreren Positionsmotoren dafür gestaltet ist, in Reaktion auf einen Positionsbefehl eine Winkelposition zu verändern,
mindestens eine gemeinsame Zufuhrleitung, die eine Fluidverbindung zwischen dem Behälter und den mehreren Pumpen (104, 204, 304, 404) bereitstellt,
eine Ausbringungsleitung, die sich von jeder Pumpe (104, 204, 304, 404) der mehreren Pumpen (104, 204, 304, 404) aus und in Fluidverbindung mit dieser erstreckt, und eine Steuerung (115), die dafür gestaltet ist, Positionsbefehle an die mehreren Positionsmotoren zu senden, wobei die Steuerung dafür gestaltet ist, das Ausbringen von Verbrauchsgut gemäß dem Verfahren nach einem der Ansprüche 1 bis 6 durchzuführen.

## Revendications

1. Procédé de distribution précise d'un produit agricole à l'aide d'un outil agricole (500, 502, 600, 710), le procédé comprenant :
la détermination d'un volume du produit agricole destiné à être distribué ;
la corrélation du volume du produit agricole destiné à être distribué avec un changement d'une position d'un moteur positionnel (754), le moteur positionnel (754) étant fonctionnellement couplé à une pompe (104, 204, 304, 404, 752) ;
après la corrélation du volume du produit agricole destiné à être distribué avec le changement de la position du moteur positionnel (754), l'envoi d'une instruction au moteur positionnel (754), l'instruction comprenant une composante positionnelle proportionnelle au changement de la position du moteur positionnel (754) ;
le changement de la position du moteur positionnel (754) en réponse à la composante positionnelle de l'instruction ;
l'entraînement de la pompe (104, 204, 304, 404, 752) en réponse au changement de la position du moteur positionnel (754) en réponse à la composante positionnelle de l'instruction ; et
la distribution du volume du produit agricole en réponse à l'entraînement de la pompe (104, 204, 304, 404, 752) ; la détermination d'une valeur de temps pendant laquelle le produit agricole doit être distribué, dans lequel l'instruction envoyée au moteur positionnel (754) comprend une composante temporelle proportionnelle à la valeur de temps pendant laquelle le produit agricole doit être distribué ; et
le changement de la position du moteur positionnel (754) en réponse à la composante temporelle de l'instruction.

2. Procédé de distribution précise d'un produit agricole de la revendication 1, dans lequel le changement de la position du moteur positionnel (754) comprend le changement d'une position angulaire du moteur positionnel (754).

3. Procédé de distribution précise d'un produit agricole de la revendication 1 ou 2, dans lequel la corrélation du volume du produit agricole destiné à être distribué avec un changement d'une position d'un moteur positionnel (754) comprend la détermination du changement de la position du moteur positionnel (754) nécessaire pour distribuer le volume du produit agricole.

4. Procédé de distribution précise d'un produit agricole de l'une des revendications 1 à 3, dans lequel le changement de la position du moteur positionnel (754) en réponse à la composante temporelle de l'instruction comprend le changement de la position du moteur positionnel (754) en réponse à la composante positionnelle de l'instruction dans les limites de la valeur de temps pendant laquelle le produit agricole doit être distribué.

5. Procédé de distribution précise d'un produit agricole de l'une des revendications 1 à 4, comprenant en outre la détermination d'une vitesse de déplacement en marche avant d'un outil agricole (500, 600, 710) depuis lequel le produit agricole doit être distribué.

6. Procédé de distribution précise d'un produit agricole de la revendication 5, dans lequel la composante temporelle de l'instruction est réactive à la vitesse de déplacement en marche avant de l'outil agricole (500, 600, 710) depuis lequel le produit agricole doit être distribué.

7. Outil agricole (710) ayant une pluralité d'unités de rang (712) et un système de dosage de produit (750), le système de dosage de produit (750) comprenant :
un réservoir de produit (768) destiné à contenir une quantité d'un produit ;
une pluralité de pompes (752), dans lequel au moins une pompe (752) est située sur chaque unité de rang (712) de la pluralité d'unités de rang (712), et dans lequel chaque pompe (752) de la pluralité de pompes (752) est en communication fluidique avec le réservoir de produit (768) ;
une pluralité de tubes de distribution (758), chaque tube de distribution (758) de la pluralité tubes (758) ayant une première extrémité (756) et une seconde extrémité (764), la première extrémité (756) de chaque tube de distribution (758) étant associée à, et en communication fluidique avec, une pompe (752) de la pluralité de pompes (752) et la seconde extrémité (764) de chaque tube de distribution (758) étant configurée pour distribuer le produit ;
une pluralité de moteurs positionnels (754), dans lequel au moins un moteur positionnel (754) est située sur chaque unité de rang (712) de la pluralité d'unités de rang (712), et dans lequel chaque moteur positionnel (754) de la pluralité de moteurs positionnels (754) est associé à une pompe (752) de la pluralité de pompes (752) ;
un appareil de commande (115, 770) configuré pour envoyer des instructions à la pluralité de moteurs positionnels (754), les instructions comprenant une composante de position de moteur ; et dans lequel chaque moteur positionnel (754) de la pluralité de moteurs positionnels (754) est configuré pour recevoir des instructions en provenance de l'appareil de commande (770) et changer une position du moteur (754) en réponse à la composante de position de moteur, dans lequel l'appareil de commande est configuré pour réaliser la distribution de produit selon le procédé de l'une des revendications 1 à 6.

8. Système pulvérisateur agricole (500, 502, 600), ayant un système de pompes distribuées (100, 200, 300, 400) avec une pluralité de pompes (104, 204, 304, 404) et un système de dosage de produit comprenant :
un réservoir (103) destiné à contenir un produit ;
une pluralité de moteurs positionnels, chaque moteur positionnel de la pluralité de moteurs positionnels étant fonctionnellement couplé à une pompe (104, 204, 304, 404) de la pluralité de pompes (104, 204, 304, 404), dans lequel chaque moteur positionnel de la pluralité de moteurs positionnels est configuré pour changer une position angulaire en réponse à une instruction positionnelle ;
au moins une conduite d'alimentation commune assurant une communication fluidique entre le réservoir et la pluralité de pompes (104, 204, 304, 404) ;
une conduite de distribution s'étendant depuis, et en communication fluidique avec, chaque pompe (104, 204, 304, 404) de la pluralité de pompes (104, 204, 304, 404) ; et
un appareil de commande (115) configuré pour envoyer des instructions positionnelles à la pluralité de moteurs positionnels ; dans lequel l'appareil de commande est configuré pour réaliser la distribution de produit selon le procédé de l'une des revendications 1 à 6.
